# EUROPEAN PATENT APPLICATION

(11) **EP 1 686 526 A1**
(43) Date of publication of application: **02.08.2006**
(21) Application number: 06100381.0
(22) Date of filing: 16.01.2006
(51) Int. Cl.: G06Q 20/00, G07F 7/08

(54) **Electronic credit management system for vending machines**

(30) Priority: 28.01.2005 IT MI20050128
(71) Applicant: Vesiel S.p.A., 22069 Rovellasca (Como) (IT)
(72) Inventor: VENTURA, Mauro, 22032, ALBESE CON CASSANO CO (IT)
(74) Representative: Modiano, Micaela Nadia

(57) **Abstract**

An electronic credit management system, particularly for vending machines and the like, comprising, in a vending machine (1), at least one modem (2) adapted to receive a telephone call made by a user of the vending machine; at least one database (6), which is adapted to contain a list of telephone numbers with which a corresponding number of accounts onto which credit can be deposited or withdrawn is associated; a system (5) for introducing cash, which allows to increase said virtual account of the user.

## Description

The present invention relates to an electronic credit management system particularly for vending machines and the like. More particularly, the invention relates to an electronic credit management system for vending machines which can also be used by occasional customers of the vending machine.

As it is known, cashless payment systems, i.e., systems in which there is an electronic medium which stores a (usually prepaid) credit available to the user for making purchases at the vending machine are currently commercially available.

Said electronic medium is a physical device available to the user, and the owner of the medium is also the owner of the credit stored therein.

The device that provides the medium must have certain specific characteristics: first of all, it must be compact and lightweight, so that it can be stored easily for example in a pocket of the user, it must be mechanically strong, and it must be durable.

The data stored on the medium must not be modifiable except by means of an appropriately provided reader, in order to prevent tampering with the credit value contained on the medium.

A device of the type described above has a high cost, and therefore a deposit is usually requested from the user in order to have it. The user who is given the medium must return it when it is no longer reused in order to recover the deposit.

This makes it scarcely practical to use a physical medium to manage a cashless payment system in locations where users, despite using the vending machine several times, are not habitual clients of the location, as can instead occur in the case of a workplace. The locations described above where the client might not be habitual are for example hospitals, schools and the like.

The aim of the present invention is to provide an electronic credit management system which allows even an occasional user to use electronic credit without having to resort to a known type of electronic medium.

Within this aim, an object of the present invention is to provide an electronic credit management system particularly for vending machines and the like, in which the credit data cannot be altered in any way except by intervention of the user who owns such credit.

Another object of the present invention is to provide an electronic credit management system, particularly for vending machines and the like, which does not use a physical medium to be supplied to the user.

Another object of the present invention is to provide an electronic credit management system which is highly reliable, relatively simple to provide and at competitive costs.

This aim and these and other objects, which will become better apparent hereinafter, are achieved by an electronic credit management system, particularly for vending machines and the like, characterized in that it comprises, in a vending machine, at least one modem adapted to receive a telephone call made by a user of the vending machine;
at least one database, which is adapted to contain a list of telephone numbers with which a corresponding number of accounts onto which credit can be deposited or withdrawn is associated;
a system for introducing cash, which allows to increase said virtual account of the user;
an information display system, which is accessible to the user of the system.

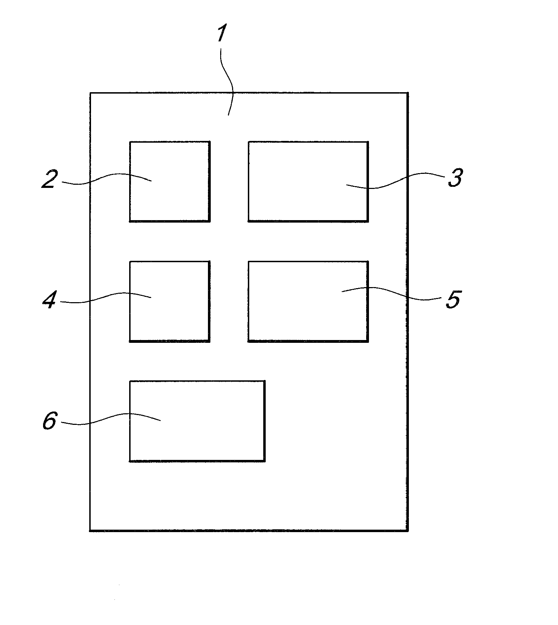

Further characteristics and advantages of the invention will become better apparent from the description of a preferred but not exclusive embodiment of the credit management system according to the present invention, illustrated by way of non-limiting example in the accompanying drawings, wherein the only figure is a block diagram of the system according to the present invention.

The credit management system according to the invention comprises a vending machine 1, which is provided with a modem 2, for example of the GSM or GPRS type or the like, with its own telephone number.

The vending machine further comprises an alphanumeric display 3, a confirmation button 4, optionally a cancellation button 7, and a payment/change return system 5 of a conventional type.

The purchase of an item by a user at the vending machine 1 can occur by using cash or credit available on an "account" of his own, identified by the telephone number of the cellular telephone of the user who is making the purchase.

In the first case, the user introduces the cash, purchases a product, and possibly receives change.

In the second case, the user uses for the purchase the available credit related to his mentioned "account".

Substantially, the vending machine 1 stores, in a database 6, for each telephone number that corresponds to each one of different users, an "account" of the user.

Such account is generated automatically whenever a call to the vending machine is placed, by calling the vending machine's number (more specifically, the telephone number of the associated modem), and is deleted where the balance of the account is zero or after a period of time during which it has not been used in said account (for example after one year).

Therefore, the "account" is opened by calling the vending machine: the telephone number of the calling user (remote display of the calling number must be enabled in the calling telephone) identifies the "account" at the vending machine.

Substantially, the vending machine associates, in the database 6, with each telephone number of different users the corresponding account opened in order to make purchases at the vending machine.

Transactions on the account are performed until it is closed, and said closure can occur for example for two possible conditions:
1. By pressing the appropriate button 7, in order to prevent other users from working on the account;
2. After a certain period of non-use of the vending machine (for example 30 seconds).

### Several scenarios can occur:

1. The user merely wishes to view his own credit: in this case he calls, by means of his telephone, the vending machine, which asks the user to press a button to confirm the displayed number. If the user confirms the number, the account associated with the number is opened and the total available credit is displayed on the display 3. At this point, the user can press the button 7 in order to indicate the end of the operation.
   If, after the call, the user does not confirm with the button 4 the beginning of the operation, he can delete the displayed number by pressing the button 7, or by waiting for a 10-second timeout the number is deleted automatically and the corresponding account is not opened.
2. The user wishes to purchase a product of the vending machine by using his own credit: by means of his telephone he calls the vending machine, which asks the user to press a button to confirm the displayed number. If the user confirms the number, the stored account is opened and displays the total available credit. Said credit can be used to make a purchase by means of an appropriate selection of the product by the user. At the end of the purchase, the system displays the new credit available, which can be used for a plurality of successive purchases.
   Once the last purchase operation has been performed, the user again presses the button 7 in order to indicate the end of the operation.
3. The user wishes to add cash to his credit and in this case calls the vending machine 1, which asks the user to press a button to confirm the displayed number. If the user confirms the number, the account of said user is opened and the total credit available is shown on the display 3. The user, in this case, can introduce, by means of an appropriate device for recognizing coins, banknotes, et cetera, cash which immediately increases the available credit, with an immediate indication on the display 3. The resulting total credit can also be used to make purchases. After performing the last purchase or cash deposit operation, the user presses the button 7 in order to end the operation.
4. The user wishes to add cash to his own credit; he introduces cash, and calls the vending machine, which asks the user to press a button to confirm the displayed number. If the user confirms the number, the account of said user is opened; the "account" is increased by the value of the cash available. The operation is closed by pressing the button 5.
5. The user wishes the residual credit to be returned to him: he calls the vending machine, which asks the user to press the button 4 in order to confirm the displayed number. If the user confirms the number, the corresponding account is opened. The user presses the escrow lever of the change return system of the vending machine and, if the credit available is lower than the maximum change, the amount is returned as cash to the customer and the corresponding account is closed.

In all cases, if at the end of the operations the user does not press the button 7, the credit of the account opened by means of the telephone call and the subsequent confirmation by means of the button 4 remains available for subsequent use.

When the user is making a call to the vending machine 1 by means of his own mobile telephone, the display 3 displays the telephone number of the user, who when the operations are completed presses the button 7, allowing the user to check always which account is active during the various operations.

If, during the sale/top-up session, a call from another telephone is placed to the vending machine, the user in front of the vending machine can interrupt his operation in progress, seeing a different telephone number displayed.

The payment system can store a certain number of transactions performed on the credit and said memory can be queried in order to perform statistical analyses and for resolving disputes between the user and the operator of the vending machine.

The database of the "accounts" 6 can reside in the vending machine 1 or can be shared over a network if a plurality of vending machines are connected together in a network.

In the first case, the operations for loading and using the credit can be performed only on the vending machine in which the payment system is installed.

In the second case, the operations can be performed on all the vending machines connected in a network.

In practice it has been found that the electronic credit management system according to the present invention fully achieves the intended aim and objects, since it allows a user to avoid carrying with him any electronic medium onto which the credit is stored, simply using instead his cellular telephone, with which the opening of a virtual account is associated automatically via the database of the vending machine or a more general network database.

In this manner, the risk of tampering with the electronic media on which it is possible to deposit credit, and the possibility of theft or loss of the electronic medium, are substantially eliminated.

The system thus conceived is susceptible of numerous modifications and variations, all of which are within the scope of the appended claims; all the details may further be replaced with other technically equivalent elements.

The disclosures in Italian Patent Application No. MI2005A000128 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An electronic credit management system, particularly for vending machines and the like, **characterized in that** it comprises, in a vending machine (1), at least one modem (2) adapted to receive a telephone call made by a user of the vending machine;
at least one database (6), which is adapted to contain a list of telephone numbers with which a corresponding number of accounts onto which credit can be deposited or withdrawn is associated;
a system (5) for introducing cash, which allows to increase said virtual account of the user.

2. The system according to claim 1, **characterized in that** said modem (2) is provided with its own telephone number, which the user must call in order to open said account.

3. The system according to claim 1, **characterized in that** it comprises a button (4) for confirmation of the operation in progress on the part of the user and for ending said operation.

4. The system according to claim 3, **characterized in that** it comprises, in addition to the confirmation button (4), a canceling button (7) in order to end an unwanted operation.

5. A method for managing electronic credit, particularly for a vending machine, by way of the system according to one or more of the preceding claims, **characterized in that** it comprises the steps of:
having a user of a vending machine (1) place a telephone call to said vending machine, in order to open an account associated with the telephone number of said user;
performing, on the part of said user, an operation for topping up said account by introducing cash and/or credit originating from different sources, or performing a purchase operation by means of said vending machine;
ending said cash deposit and/or credit top-up operation or said purchase operation.

6. A vending machine, **characterized in that** it comprises an electronic credit management system according to one or more of claims 1 to 4.
